# EUROPÄISCHE PATENTSCHRIFT

(11) **EP 3 673 576 B1**
(45) Veröffentlichungstag und Bekanntmachung des Hinweises auf die Patenterteilung: **26.01.2022**
(21) Anmeldenummer: 18752745.2
(22) Anmeldetag: 08.08.2018
(51) Int. Cl.: H02P 6/18, H02P 6/15, H02P 25/03

(54) **VERFAHREN UND VORRICHTUNG ZUM BETRIEB EINES ELEKTRONISCH KOMMUTIERTEN ELEKTROMOTORS**
METHOD AND APPARATUS FOR OPERATING AN ELECTRONICALLY COMMUTATED ELECTRIC MOTOR
PROCÉDÉ ET DISPOSITIF SERVANT À FAIRE FONCTIONNER UN MOTEUR ÉLECTRIQUE À COMMUTATION ÉLECTRONIQUE

(30) Priorität: 22.08.2017 DE 102017214637
(43) Veröffentlichungstag der Anmeldung: 01.07.2020
(73) Patentinhaber: Robert Bosch GmbH, 70442 Stuttgart (DE)
(72) Erfinder: MUELLER, Tankred, 22303 Hamburg (DE)
(86) Internationale Anmeldenummer: PCT/EP2018/071496
(87) Internationale Veröffentlichungsnummer: WO 2019/038086

(56) Entgegenhaltungen:
- DE-A1- 10 326 606
- DE-A1- 10 346 711
- DE-T1- 19 882 041

## Beschreibung

### Stand der Technik

Es ist bereits ein Verfahren zum Betrieb eines elektronisch kommutierten Elektromotors, bei welchem während eines laufenden Betriebs des Elektromotors zur Erreichung eines optimalen Betriebspunkts des Elektromotors ein von einem Regler bereitgestellter Vorkommutierungswinkel geregelt wird, vorgeschlagen worden.

In der DE 103 26 606 A1 ist ein Verfahren zum Kommutieren eines bürstenlosen Gleichstrommotors offenbart. In der DE 198 82 041 A1 ist ein Verfahren und eine Vorrichtung zum Steuern eines Motors in einem Plattenlaufwerk durch Modulieren des Kommutierungswinkels offenbart.

### Offenbarung der Erfindung

Die Erfindung geht aus von einem Verfahren zum Betrieb eines elektronisch kommutierten Elektromotors, bei welchem während eines laufenden Betriebs des Elektromotors zur Erreichung eines optimalen Betriebspunkts des Elektromotors ein von einem Regler bereitgestellter Vorkommutierungswinkel geregelt wird.

Erfindungsgemäß wird vorgeschlagen, dass während eines Betriebs des Elektromotors ein periodisches, vorzugsweise harmonisches, Signal auf den Vorkommutierungswinkel aufmoduliert und eine mit einer Effizienz des Elektromotors korrelierende Zustandskenngröße des Elektromotors, insbesondere ein Stromsignal einer Stromaufnahme des Elektromotors, erfasst wird. Weiterhin wird erfindungsgemäß vorgeschlagen, dass in einem Verfahrensschritt die Zustandskenngröße mit dem periodischen Signal multipliziert wird.

Der Elektromotor ist insbesondere als ein bürstenloser Gleichstrommotor ausgebildet. Insbesondere ist der Elektromotor dazu vorgesehen, eine rotierende Bewegung zu erzeugen, wobei ein vorzugsweise permanent- und/oder fremderregter Rotor des Elektromotors relativ zu einem Stator des Elektromotors, welcher insbesondere eine Mehrzahl von Wicklungssträngen aufweist, drehbar gelagert ist. Der Elektromotor kann insbesondere als ein Außenläufermotor oder als ein Innenläufermotor ausgebildet sein. Es kann sich insbesondere um einen dreiphasigen Elektromotor handeln, jedoch sind auch mehrere Phasen, beispielsweise fünf oder sieben, denkbar.

Für einen optimalen Betrieb des Elektromotors ist es insbesondere erforderlich, dass sich ein insbesondere minimal möglicher Strom in dem Elektromotor einstellt. Hierzu sollten die inneren Spannungen des Elektromotors und der zugehörige Motorgrundwellenstrom in Phase liegen. Hierzu ist insbesondere aufgrund der Induktivität des Elektromotors eine zeitlich vorversetzte Ansteuerung der Phase nötig. Diese Korrektur, welche das nacheilende Verhalten des Motorgrundwellenstroms kompensiert, wird durch den sogenannten Vorkommutierungswinkel beschrieben. Ein idealer Vorkommutierungswinkel führt zu einer optimalen Effizienz des Elektromotors. Bei bestimmten Verhältnissen kann eine Regelung des Vorkommutierungswinkels unabdingbar sein, zum Beispiel, wenn der Elektromotor bei maximaler Temperatur und/oder Leistung, bedingt durch eine Belastung und durch eine Motordimensionierung, an einer Spannungsauslegungsgrenze betrieben wird.

Zur Regelung des Vorkommutierungswinkels ist der Elektromotor mit einer zusätzlichen erfindungsgemäßen Regelvorrichtung ausgestattet. Die Regelvorrichtung ist dazu vorgesehen, den Elektromotor durch eine Nachregelung des Vorkommutierungswinkels zu einem optimalen Betriebspunk zu führen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Erfindungsgemäß wird vorgeschlagen, dass zur Bestimmung eines an einen aktuellen Betriebszustand des Elektromotors angepassten Vorkommutierungswinkel, in einem Verfahrensschritt während eines Betriebs des Elektromotors ein periodisches, vorzugsweise harmonisches, Signal, insbesondere ein harmonisches Signal kleiner Amplitude, auf den aktuellen Vorkommutierungswinkel aufmoduliert.

Eine vorteilhafte Weiterbildung ist, eine Frequenz des periodischen Signals an eine Einschwingzeit des Elektromotors anzupassen. Zu einer Ausregelung verhältnismäßig langsamer thermischer Vorgänge des Elektromotors ist ein Signal mit einer Periodendauer von beispielsweise 10 Sekunden ausreichend.

Erfindungsgemäß wird weiter vorgeschlagen, dass eine mit einer Effizienz des Elektromotors korrelierende Zustandskenngröße des Elektromotors erfasst wird. Vorzugsweise wird ein Stromsignal einer Stromaufnahme des Elektromotors erfasst.

Eine vorteilhafte Weiterbildung ist, anstelle einer Messung eines Gesamtstroms auch eine Erfassung anderer Größen, beispielsweise einer mittleren Stromaufnahme des Elektromotors, denkbar. Die Strommessung erfolgt vorzugsweise mit > 10 Messpunkten pro Periode des aufmodulierten periodischen Signals. Hierdurch kann eine formtreue Signalrekonstruktion erreicht werden.

Eine vorteilhafte Weiterbildung ist, dass im weiteren Verlauf des Verfahrens aus einer Korrelation zwischen dem periodischen Signal und einer Variation der Zustandskenngröße ein an einen aktuellen Betriebszustand des Elektromotors angepassten Vorkommutierungswinkel bestimmt wird.

Eine vorteilhafte Weiterbildung der Erfindung ist, dass in einem Verfahrensschritt die erfasste Zustandskenngröße mit dem periodischen Signal und dem um 90° phasenverschobenen periodischen Signal multipliziert.

Eine vorteilhaften Weiterbildung der Erfindung ist, dass in einem weiteren Verfahrensschritt wird eine Integration der Produkte der Multiplikationen der Zustandskenngröße mit dem periodischen Signal und dem um 90° phasenverschobenen periodischen Signal durchgeführt.

Eine vorteilhaften Weiterbildung der Erfindung ist, dass in einem weiteren Verfahrensschritt die Integrationsergebnisse dividiert und die Arkustangens-Funktion des Quotienten berechnet werden.

Eine vorteilhaften Weiterbildung der Erfindung ist, dass in einem weiteren Verfahrensschritt wird der berechnete Winkel als an einen aktuellen Betriebszustand des Elektromotors angepasster Vorkommutierungswinkel verwendet. Der mittels des Verfahrens bestimmte Winkel kann unmittelbar als Regelsignal für den Elektromotor genutzt werden.

Durch ein derartiges Verfahren kann eine vorteilhaft einfache Regelung des Vorkommutierungswinkels und somit ein vorteilhaft effizienter Betrieb eines Elektromotors erreicht werden. Ferner kann das Antriebsverhalten des Elektromotors vorteilhaft an eine reale Ausführung des Elektromotors angepasst werden. Ferner kann durch die Regelung im laufenden Betrieb des Elektromotors der Vorkommutierungswinkel vorteilhaft an eine Erwärmung des Elektromotors angepasst werden. Zudem können Veränderungen vom Komponenten des Elektromotors durch Verschleiß und/oder Alterung vorteilhaft ausgeglichen werden, Dimensionierungsreserven bei der Auslegung können vorteilhaft entfallen.

Des Weiteren umfasst die Erfindung eine Regelvorrichtung zur Durchführung des Verfahrens mit zumindest einer Regeleinheit, welche dazu vorgesehen ist, während eines laufenden Betriebs eines elektronisch kommutierten Elektromotors zur Erreichung eines optimalen Betriebspunkts des Elektromotors einen Vorkommutierungswinkel zu regeln.

Erfindungsgemäß wird vorgeschlagen, dass die Regelvorrichtung zumindest eine Signalgeneratoreinheit aufweist, welche dazu vorgesehen ist, während des Betriebs des Elektromotors ein periodisches, vorzugsweise harmonisches, Signal auf den Vorkommutierungswinkel aufzumodulieren. Insbesondere ist die Signalgeneratoreinheit dazu vorgesehen, ein harmonisches Signal, insbesondere ein harmonisches Signal kleiner Amplitude, zu erzeugen und/oder auszugeben und auf den aktuellen Vorkommutierungswinkel aufzumodulieren. Eine Frequenz des periodischen Signals ist an eine Einschwingzeit des Elektromotors anzupassen. Zu einer Ausregelung verhältnismäßig langsamer thermischer Vorgänge des Elektromotors ist ein Signal mit einer Periodendauer von beispielsweise 10 Sekunden ausreichend.

Erfindungsgemäß wird vorgeschlagen, dass die Regelvorrichtung zumindest eine Sensoreinheit aufweist, welche dazu vorgesehen ist, eine mit einer Effizienz des Elektromotors korrelierende Zustandskenngröße des Elektromotors, vorzugsweise ein Stromsignal einer Stromaufnahme des Elektromotors, zu erfassen. Die Erfassung der Zustandskenngröße erfolgt vorzugsweise mit > 10 Messpunkten pro Periode des aufmodulierten periodischen Signals. Hierdurch kann eine formtreue Signalrekonstruktion erreicht werden. Durch eine derartige Regelvorrichtung kann eine vorteilhaft einfache Regelung des Vorkommutierungswinkels und somit ein vorteilhaft effizienter Betrieb eines Elektromotors erreicht werden.

Erfindungsgemäß wird vorgeschlagen, dass die Regelvorrichtung eine Recheneinheit aufweist, welche dazu vorgesehen ist, aus einer Korrelation zwischen dem periodischen Signal und einer Variation der Zustandskenngröße einen an einen aktuellen Betriebszustand des Elektromotors angepassten Vorkommutierungswinkel zu bestimmen. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf.

Eine vorteilhafte Weiterbildung ist, dass die Recheneinheit dazu vorgesehen ist, die erfasste Zustandskenngröße mit dem periodischen Signal und insbesondere dem um 90° phasenverschobenen periodischen Signal zu multiplizieren.

Eine vorteilhafte Weiterbildung ist, dass die Recheneinheit zu einer Integration der Produkte der Multiplikationen der Zustandskenngröße mit dem periodischen Signal und dem um 90° phasenverschobenen periodischen Signal vorgesehen ist.

Eine vorteilhafte Weiterbildung ist, dass die Recheneinheit dazu vorgesehen, eine Division der Integrationsergebnisse durchzuführen und die Arkustangens-Funktion des Quotienten zu berechnen ist. Der so berechnete Winkel kann vorteilhaft als an einen aktuellen Betriebszustand des Elektromotors angepasster Vorkommutierungswinkel verwendet werden.

Weiterhin betrifft die Erfindung ein Antriebssystem mit zumindest einem elektronisch kommutierten Elektromotor und zumindest einer erfindungsgemäßen Regelvorrichtung.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

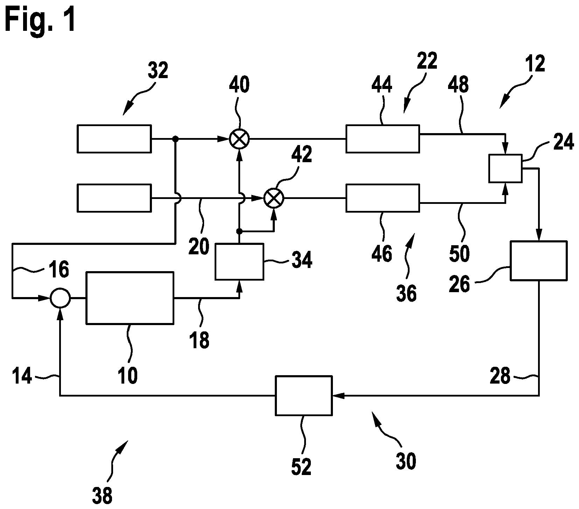

- Fig. 1: ein Blockschaltbild eines Antriebssystems mit einem elektronisch kommutierten Elektromotor und einer Regelvorrichtung.

### Beschreibung des Ausführungsbeispiels

Figur 1 zeigt ein Blockschaltbild eines Antriebssystems 38. Das Antriebssystem 38 umfasst einen elektronisch kommutierten Elektromotor 10 und eine Regelvorrichtung 12 zur Regelung des Elektromotors 10. Die Regelvorrichtung 12 weist eine Regeleinheit 30 auf, welche dazu vorgesehen ist, während eines laufenden Betriebs des elektronisch kommutierten Elektromotors 10 zur Erreichung eines optimalen Betriebspunkts des Elektromotors 10 einen Vorkommutierungswinkel 14 zu regeln. Insbesondere ist der Elektromotor 10 dazu vorgesehen, eine rotierende Bewegung zu erzeugen, wobei ein vorzugsweise permanent- und/oder fremderregter Rotor des Elektromotors 10 relativ zu einem Stator des Elektromotors 10, welcher insbesondere eine Mehrzahl von Wicklungssträngen aufweist, drehbar gelagert ist. Der Elektromotor 10 kann insbesondere als ein Außenläufermotor oder als ein Innenläufermotor ausgebildet sein. Es kann sich insbesondere um einen dreiphasigen Elektromotor 10 handeln, jedoch sind auch mehrere Phasen, beispielsweise fünf oder sieben, denkbar.

Die Regelvorrichtung 12 weist eine Signalgeneratoreinheit 32 auf, welche dazu vorgesehen ist, während des Betriebs des Elektromotors 10 ein periodisches, vorzugsweise harmonisches Signal 16, insbesondere ein Sinussignal, zu erzeugen und auf den Vorkommutierungswinkel 14 aufzumodulieren. Insbesondere ist die Signalgeneratoreinheit 32 dazu vorgesehen, ein harmonisches Signal 16 kleiner Amplituden zu erzeugen und/oder auszugeben und auf den aktuellen Vorkommutierungswinkel 14 aufzumodulieren. Eine Frequenz des periodischen Signals 16 ist insbesondere an eine Einschwingzeit des Elektromotors 10 angepasst. Zu einer Ausregelung verhältnismäßig langsamer thermischer Vorgänge des Elektromotors 10 ist ein harmonisches Signal 16 mit einer Periodendauer von beispielsweise 10 Sekunden ausreichend.

Zusätzlich ist die Signalgeneratoreinheit 32 dazu vorgesehen, parallel zu dem periodischen Signal 16 das um 90° phasenverschobene periodische Signal 20 auszugeben. Ferner weist die Regelvorrichtung 12 eine Sensoreinheit 34 auf, welche dazu vorgesehen ist, eine mit einer Effizienz des Elektromotors 10 korrelierende Zustandskenngröße 18 des Elektromotors 10, vorzugsweise ein Stromsignal einer Stromaufnahme des Elektromotors 10, zu erfassen. Die Erfassung der Zustandskenngröße 18 durch die Sensoreinheit 34 erfolgt vorzugsweise mit > 10 Messpunkten pro Periode des aufmodulierten periodischen Signals 16. Hierdurch kann eine formtreue Signalrekonstruktion erreicht werden. Zudem weist die Regelvorrichtung 12 eine Recheneinheit 36 auf, welche dazu vorgesehen ist, aus einer Korrelation zwischen dem periodischen Signal 16 und einer Variation der Zustandskenngröße 18 einen an einen aktuellen Betriebszustand des Elektromotors 10 angepassten Vorkommutierungswinkel 14 zu bestimmen.

Zur automatischen Regelung des Vorkommutierungswinkels 14 während des Betriebs des Elektromotors 10, wird während des Betriebs des Elektromotors 10 das von der Signalgeneratoreinheit 32 erzeugte periodische Signal 16 auf den aktuellen Vorkommutierungswinkel 14 aufmoduliert. Ferner wird während des Betriebs des Elektromotors 10 mittels der Sensoreinheit 34 eine mit einer Effizienz des Elektromotors 10 korrelierende Zustandskenngröße 18 des Elektromotors 10, vorzugsweise ein Stromsignal einer Stromaufnahme des Elektromotors 10, erfasst. Die erfasste Zustandskenngröße 18 wird in einem Verfahrensschritt mit dem periodischen Signal 16 und dem ebenfalls von der Signalgeneratoreinheit 32 erzeugten um 90° phasenverschobenen periodischen Signal 20 multipliziert. Hierzu weist die Recheneinheit 36 zwei Multiplizierer 40, 42 auf. Ein erster Multiplizierer 40 ist dazu vorgesehen, die Zustandskenngröße 18 mit dem periodischen Signal 16 zu multiplizieren. Der zweite Multiplizierer 42 ist dazu vorgesehen, die Zustandskenngröße 18 mit dem um 90° phasenverschobenen periodischen Signal 20 zu multiplizieren.

In einem weiteren Verfahrensschritt wird jeweils eine Integration 22 der Produkte 48, 50 der Multiplikationen der Zustandskenngröße 18 mit dem periodischen Signal 16 und dem um 90° phasenverschobenen periodischen Signal 20 durchgeführt. Hierzu weist die Recheneinheit 36 zwei Integrierer 44, 46 auf. Ein erster Integrierer 44 ist dazu vorgesehen, das Produkt 48 aus der Multiplikation der Zustandskenngröße 18 mit dem periodischen Signal 16 zu integrieren. Der zweite Integrierer 46 ist dazu vorgesehen, das Produkt 50 der Multiplikation der Zustandskenngröße 18 mit dem um 90° phasenverschobenen periodischen Signal 20 zu integrieren.

In einem weiteren Verfahrensschritt wird eine Division 24 der Integrationsergebnisse durchgeführt und die Arkustangens-Funktion 26 des Quotienten berechnet. Der so bestimmte Winkel 28 ist direkt als Regelsignal für einen insbesondere als PI-Regler ausgebildeten Regler 52 nutzbar. Der so berechnete Winkel 28 wird als an einen aktuellen Betriebszustand des Elektromotors 10 angepasster Vorkommutierungswinkel 14 verwendet. Insbesondere kann der Vorkommutierungswinkel 14 während eines Betriebs des Elektromotors 10 kontinuierlich oder in vorgegebenen zeitlichen Abständen ermittelt werden. Auf diese Weise kann erreicht werden, dass der im aktuellen Betriebspunkt optimale Vorkommutierungswinkel 14 ermittelt und eingestellt wird. Alternativ oder zusätzlich kann vorgesehen sein, dass nur bei einer Änderung des Betriebspunkts eine neue Ermittlung des Vorkommutierungswinkels 14 vorgenommen wird.

## Patentansprüche

1. Verfahren zum Betrieb eines elektronisch kommutierten Elektromotors (10), bei welchem während eines laufenden Betriebs des Elektromotors (10) zur Erreichung eines optimalen Betriebspunkts des Elektromotors (10) ein von einer Regelvorrichtung (12) bereitgestellter Vorkommutierungswinkel (14) geregelt wird, **dadurch gekennzeichnet, dass** während eines Betriebs des Elektromotors (10) ein periodisches Signal (16) auf den Vorkommutierungswinkel (14) aufmoduliert und eine mit einer Effizienz des Elektromotors (10) korrelierende Zustandskenngröße (18) des Elektromotors (10) erfasst wird und dass in einem Verfahrensschritt die Zustandskenngröße (18) mit dem periodischen Signal (16) multipliziert wird.

2. Verfahren nach Anspruch 1, **dadurch gekennzeichnet, dass** in einem Verfahrensschritt die Zustandskenngröße (18) mit dem um 90° phasenverschobenen periodischen Signal (20) multipliziert wird.

3. Verfahren nach Anspruch 2, **dadurch gekennzeichnet, dass** in einem weiteren Verfahrensschritt eine Integration (22) der Produkte (48, 50) der Multiplikationen der Zustandskenngröße (18) mit dem periodischen Signal (16) und dem um 90° phasenverschobenen periodischen Signal (20) durchgeführt wird.

4. Verfahren nach Anspruch 3, **dadurch gekennzeichnet, dass** in einem weiteren Verfahrensschritt eine Division (24) der Integrationsergebnisse durchgeführt und eine Arkustangens-Funktion (26) zur Berechnung eines Winkels berechnet wird.

5. Verfahren nach Anspruch 4, **dadurch gekennzeichnet, dass** in einem weiteren Verfahrensschritt der berechnete Winkel (28) als an einen aktuellen Betriebszustand des Elektromotors (10) angepasster Vorkommutierungswinkel (14) verwendet wird.

6. Regelvorrichtung zur Durchführung eines Verfahrens nach einem der vorhergehenden Ansprüche mit zumindest einer Regeleinheit (30), welche dazu vorgesehen ist, während eines laufenden Betriebs eines elektronisch kommutierten Elektromotors (10) zur Erreichung eines optimalen Betriebspunkts des Elektromotors (10) einen Vorkommutierungswinkel (14) zu regeln, **gekennzeichnet durch** zumindest eine Signalgeneratoreinheit (32), welche dazu vorgesehen ist, während des Betriebs des Elektromotors (10) ein periodisches Signal (16) auf den Vorkommutierungswinkel (14) aufzumodulieren und dass zumindest eine Sensoreinheit (34) vorgesehen ist, eine mit einer Effizienz des Elektromotors (10) korrelierende Zustandskenngröße (18) des Elektromotors (10) zu erfassen, und dass eine Recheneinheit (36) dazu vorgesehen ist, aus einer Korrelation zwischen dem periodischen Signal (16) und einer Variation der Zustandskenngröße (18) einen an einen aktuellen Betriebszustand des Elektromotors (10) angepassten Vorkommutierungswinkel (14) zu bestimmen.

7. Regelvorrichtung nach Anspruch 6, **dadurch gekennzeichnet, dass** die Recheneinheit einen Multiplizierer (40) aufweist, der die Zustandskenngröße (18) mit dem periodischen Signal (16) multipliziert.

8. Antriebssystem mit zumindest einem elektronisch kommutierten Elektromotor (10) und zumindest einer Regelvorrichtung (12) nach einem der Ansprüche 6 bis 7.

## Claims

1. Method for operating an electronically commutated electric motor (10), in which during ongoing operation of the electric motor (10) a pre-commutation angle (14) which is made available by an adjustment device (12) is adjusted in order to achieve an optimum operating point of the electric motor (10), **characterized in that** during operation of the electric motor (10) a periodic signal (16) is modulated onto the pre-commutation angle (14) and a state characteristic variable (18) of the electric motor (10), which correlates with an efficiency level of the electric motor (10), is acquired, and **in that** in a method step the state characteristic variable (18) is multiplied (40) by the periodic signal (16).

2. Method according to Claim 1, **characterized in that** in a method step the state characteristic variable (18) is multiplied by the periodic signal (20) which is phase-shifted through 90°.

3. Method according to Claim 2, **characterized in that** in a further method step integration (22) of the products (48, 50) of the multiplications of the state characteristic variable (18) with the periodic signal (16) and with the periodic signal (20) which is phase-shifted through 90° is carried out.

4. Method according to Claim 3, **characterized in that** in a further method step division (24) of the integration results is carried out, and an arc-tangent function (26) for calculating an angle is calculated.

5. Method according to Claim 4, **characterized in that** in a further method step the calculated angle (28) is used as a pre-commutation angle (14) which is adapted to a current operating state of the electric motor (10).

6. Adjustment device for carrying out a method according to one of the preceding claims with at least one adjustment unit (30) which is provided for adjusting a pre-commutation angle (14) in order to achieve an optimum operating point of the electric motor (10) during ongoing operation of an electronically commutated electric motor (10), **characterized by** at least one signal generator unit (32) which is provided for modulating a periodic signal (16) onto the pre-commutation angle (14) during operation of the electric motor (10), and in that at least one sensor unit (34) is provided for acquiring a state characteristic variable (18) of the electric motor (10), which correlates with an efficiency level of the electric motor (10), and in that a computing unit (36) is provided for determining, from a correlation between the periodic signal (16) and a variation in the state characteristic variable (18), a pre-commutation angle (14) which is adapted to a current operating state of the electric motor (10).

7. Adjustment device according to Claim 6, **characterized in that** the computing unit has a multiplier (40) which multiplies the state characteristic variable (18) by the periodic signal (16).

8. Drive system having at least one electronically commutated electric motor (10) and at least one adjustment device (12) according to either of Claims 6 and 7.

## Revendications

1. Procédé servant à faire fonctionner un moteur électrique (10) à commutation électronique, dans lequel, pendant un fonctionnement en cours du moteur électrique (10), un angle de précommutation (14) fourni par un dispositif de régulation (12) est régulé pour atteindre un point de fonctionnement optimal du moteur électrique (10),
**caractérisé en ce qu'**un signal périodique (16) est modulé sur l'angle de précommutation (14) pendant un fonctionnement du moteur électrique (10), et une grandeur caractéristique d'état (18) du moteur électrique (10), en corrélation avec un rendement du moteur électrique (10), est détectée, et **en ce que** dans une étape de procédé, la grandeur caractéristique d'état (18) est multipliée (40) par le signal périodique (16).

2. Procédé selon la revendication 1, **caractérisé en ce que** dans une étape de procédé, la grandeur caractéristique d'état (18) est multipliée par le signal périodique (20) déphasé de 90°.

3. Procédé selon la revendication 2, **caractérisé en ce que** dans une étape de procédé supplémentaire, une intégration (22) des produits (48, 50) des multiplications de la grandeur caractéristique d'état (18) par le signal périodique (16) et le signal périodique (20) déphasé de 90° est effectuée.

4. Procédé selon la revendication 3, **caractérisé en ce que** dans une étape de procédé supplémentaire, une division (24) des résultats d'intégration est effectuée, et une fonction d'arc-tangente (26) est calculée pour calculer un angle.

5. Procédé selon la revendication 4, **caractérisé en ce que** dans une étape de procédé supplémentaire, l'angle calculé (28) est utilisé comme un angle de précommutation (14) adapté à un état de fonctionnement actuel du moteur électrique (10).

6. Dispositif de régulation servant à effectuer un procédé selon l'une quelconque des revendications précédentes, comprenant au moins une unité de régulation (30) qui est prévue pour réguler un angle de précommutation (14) pendant un fonctionnement en cours d'un moteur électrique (10) à commutation électronique pour atteindre un point de fonctionnement optimal du moteur électrique (10),
**caractérisé par** au moins une unité de génération de signal (32) qui est prévue pour moduler un signal périodique (16) sur l'angle de précommutation (14) pendant le fonctionnement du moteur électrique (10), et en ce qu'au moins une unité de détection (34) est prévue pour détecter une grandeur caractéristique d'état (18) du moteur électrique (10), en corrélation avec un rendement du moteur électrique (10), et en ce qu'une unité arithmétique (36) est prévue pour déterminer, à partir d'une corrélation entre le signal périodique (16) et une variation de la grandeur caractéristique d'état (18), un angle de précommutation (14) adapté à un état de fonctionnement actuel du moteur électrique (10).

7. Dispositif de régulation selon la revendication 6, **caractérisé en ce que** l'unité arithmétique présente un multiplicateur (40) qui multiplie la grandeur caractéristique d'état (18) par le signal périodique (16) .

8. Système d'entraînement comprenant au moins un moteur électrique (10) à commutation électronique et au moins un dispositif de régulation (12) selon l'une quelconque des revendications 6 à 7.
